# EUROPEAN PATENT SPECIFICATION

(11) **EP 4 524 268 B1**
(45) Date of publication and mention of the grant of the patent: **16.09.2026**
(21) Application number: 23937758.3
(22) Date of filing: 27.07.2023
(51) Int. Cl.: C22B 3/08, C22B 1/00, C22B 3/16, C22B 3/44, C22B 3/00, C22B 26/22, C22B 47/00, C25C 7/02, C25C 7/04, C22B 3/06, C25C 1/24

(54) **METHOD FOR EXTRACTING METALS FROM SAPROLITE LATERITIC NICKEL ORE**
VERFAHREN ZUR EXTRAKTION VON METALLEN AUS SAPROLIT-LATERITISCHEM NICKELERZ
PROCÉDÉ D'EXTRACTION DE MÉTAUX À PARTIR DE MINERAI DE NICKEL LATÉRITIQUE DE SAPROLITE

(43) Date of publication of application: 19.03.2025
(73) Proprietor: PT ESG New Energy Material, Jakarta Selatan, Provinsi DKI Jakarta 12950 (ID); PT QMB New Energy Materials, Jakarta Selatan, Provinsi DKI Jakarta, 12950 (ID); GEM Co., Ltd., Bao'an Center Area, Bao'an, Shenzhen Guangdong 518101 (CN); PT Gem Indonesia New Energy Materials, Jakarta 12950 (ID)
(72) Inventor: XU, Kaihua, Shenzhen Guangdong 518100 (CN); HASIBUAN, Andi Syaputra, Provinsi DKI Jakarta 12950 (ID); WANALDI, Rizky, Provinsi DKI Jakarta 12950 (ID); AJI, Tegar Mukti, Provinsi DKI Jakarta 12950 (ID)
(74) Representative: Santarelli
(86) International application number: PCT/CN2023/109609
(87) International publication number: WO 2025/020177

(56) References cited:
- WO-A1-2022/166023
- WO-A1-2022/166023
- CN-A- 104 789 766
- CN-A- 104 789 768
- CN-A- 104 789 799
- CN-A- 104 862 473
- CN-A- 105 779 777
- CN-A- 106 591 579
- CN-A- 115 747 516
- CN-B- 102 443 700

## Description

### FIELD OF THE DISCLOSURE

The disclosure relates to the technical field of laterite nickel ore hydro metallurgy, and more particularly to a method for extracting metals from saprolite laterite nickel ore.

### BACKGROUND

With the rapid development of new energy, ternary lithium power is an important part of the future new energy field. Nickel, as one of the important elements of ternary lithium power, the efficient extraction technology of nickel resources becomes the key to the whole new energy industry. Laterite nickel ore is one of the main forms of nickel in nature, with huge reserves.

Current treatment processes for laterite nickel ore include pyrometallurgy and hydrometallurgy. The basic treatment processes for laterite nickel ore with a nickel grade of less than 1.3% are based on hydrometallurgy, including mineral pretreatment, high-pressure leaching, neutralization for impurity removal, precipitation of nickel-cobalt hydroxide, acid reverse dissolution, and extraction and crystallization to obtain a variety of nickel-cobalt products. Low-grade saprolite laterite nickel ore contains a large amount of iron, magnesium, and other elements. In the above-mentioned process flow, iron is directly discarded as slag, and magnesium is directly discharged as entrained elements in wastewater, resulting in a great waste of resources.

At present, the research on the process of low-grade laterite nickel ore is based on the use of nickel and cobalt in minerals as the basic starting point, but the other valuable metals are not used reasonably. It has also been reported to recover iron concentrate from laterite nickel ore smelting slag by means of reduction roasting-magnetic separation, but due to the low added value of iron, it often has no economic benefits. For example, Patent CN103526046A discloses an additive for the reduction of a humus-type laterite nickel ore and the use thereof, wherein the humus-type laterite nickel ore is added with an additive, reduced, crushed, and ground to obtain a powder, and then a nickel-iron alloy is obtained by magnetic separation. Therefore, it is necessary to develop a method for extracting various valuable metals from saprolite laterite nickel ore. CN10691579A discloses a method for extracting metals from laterite nickel ore and is representative of the state of the art.

### SUMMARY

In view of the deficiencies of the prior art, it is an objective of the disclosure to provide a method for extracting metals from saprolite laterite nickel ore. The disclosure combines the methods of wet treatment and electrochemical metallurgy to achieve the extraction and recovery of iron, magnesium, and other elements in the treatment stage of laterite nickel ore, achieve the short-flow deep separation of different metal elements, and improve the utilization rate of valuable metals in the laterite nickel ore.

To achieve the above objectives, the disclosure is implemented through the following technical solution:

A method for extracting metals from saprolite laterite nickel ore, including the following steps:
(1) separating and grinding the saprolite laterite nickel ore to obtain a laterite nickel ore powder;
(2) mixing the laterite nickel ore powder, water, an acid, and a reducing agent to obtain an ore pulp, and subjecting the ore pulp to atmospheric pressure acid leaching to obtain a leaching residue and a leaching solution;
(3) adding a soluble fluoride salt and soluble sodium salt to the leaching solution to obtain a silicon-aluminum residue and a de-silicon-aluminumed liquid; wherein the silicon-aluminum residue contains sodium fluoroaluminate and sodium fluorosilicate;
(4) adding a phosphorus source to the de-silicon-aluminumed liquid, and performing solid-liquid separation to obtain an iron phosphate and a de-ironed liquid;
(5) subjecting the de-ironed liquid to a one-step cyclone electrolysis to obtain a zinc-chromium alloy and a one-step cyclone electrolyzed liquid;
(6) subjecting the one-step cyclone electrolyzed liquid to a two-step cyclone electrolysis to obtain a nickel-cobalt alloy, a manganese oxide, and a two-step cyclone electrolyzed liquid; and
(7) adding sodium carbonate to the two-step cyclone electrolyzed liquid for a precipitation reaction to obtain magnesium carbonate and a de-magnesiumed liquid.

Preferably, the acid in step (2) is an organic acid or an inorganic acid, and the reducing agent is one or more of sodium sulfite, sodium bisulfite, sodium metabisulfite, iron powder, and ferrous sulfate.

Preferably, in step (2) the concentration of the acid is 1-3 mol/L; the dosage of the reducing agent is 5-20 g/L; and the solid-liquid ratio of the ore pulp is 50-300 g/L.

Preferably, the leaching temperature of the atmospheric pressure acid leaching in step (2) is 50-90°C and the leaching time is 1-5 h.

Preferably, the soluble fluoride salt in step (3) is at least one of sodium fluoride, potassium fluoride, and ammonium fluoride; the soluble sodium salt is at least one of sodium fluoride, sodium chloride, and sodium sulfate.

Preferably, in step (3), the dosage of the soluble fluoride salt used is 3-20 g/L and the dosage of the soluble sodium salt is 5-20 g/L; and the pH of the leaching solution is controlled to be 1-3 by using a dilute alkaline solution, and the reaction is carried out at room temperature for 0.5-3 h.

Preferably, the phosphorus source in step (4) is one or more of phosphoric acid, sodium phosphate, ammonium dihydrogen phosphate, ammonium monohydrogen phosphate, and ammonium phosphate; the molar ratio of the phosphorus source to the elemental iron in the leaching solution is (1-1.1): 1.

Preferably, in the one-step cyclone electrolysis of step (5), the acidity of the de-ironed liquid is 0.1-0.3 mol/L; the temperature is 30-40°C; the current density is 400-600 A/m²; and the electrolysis time is 5-10 h.

Preferably, in the two-step cyclone electrolysis of step (6), the pH of the one-step cyclone electrolyzed liquid is controlled to 2-4; the temperature is 40-50°C; the current density to 100-200 A/m²; and the electrolysis time is 5-10 h.

Preferably, the method described above further includes subjecting the de-magnesiumed liquid to evaporation and concentration to obtain sodium sulfate, and the sodium sulfate is reused as a sodium salt for silicon-aluminum removal in step (3).

### Advantageous Effect of the Disclosure

In view of the low recovery and utilization rate of resources in the saprolite laterite nickel ore, the disclosure proposes a method for extracting metals from saprolite laterite nickel ore. The method achieves the short-flow deep separation and extraction of different valuable metal elements such as zinc, chromium, nickel, cobalt and manganese in the saprolite laterite nickel ore through the steps of atmospheric pressure acid leaching---silicon-aluminum removal---iron phosphate precipitation---one-step cyclone electrolysis---two-step cyclone electrolysis---magnesium carbonate precipitation, which is an economic, efficient, green, and environment-friendly extraction process.

In the disclosure, the filtrate with magnesium being extracted is subjected to evaporation, concentration, and crystallization to separate sodium sulfate. The sodium sulfate is reused in the step of silicon-aluminum removal, thereby greatly reducing production costs and achieving a high degree of resource utilization.

### BRIEF DESCRIPTION OF THE DRAWINGS

In order to more clearly illustrate the technical solutions of the embodiments of the disclosure, the accompanying drawings of the embodiments will be briefly described below.
FIG. 1 is a flow diagram of a method for extracting metals from saprolite laterite nickel ore in accordance with the disclosure; and
FIG. 2 is the SEM image of iron phosphate prepared in Example 1 of the disclosure.

### DETAILED DESCRIPTION OF PREFERRED EMBODIMENTS

The technical solutions in the embodiments of the disclosure will be described clearly and completely in conjunction with the embodiments of the disclosure. Obviously, the described embodiments are only a part of the embodiments of the disclosure, rather than all the embodiments. Based on the embodiments of the disclosure, all other embodiments obtained by a person of ordinary skill in the art without inventive effort fall within the scope of the disclosure.

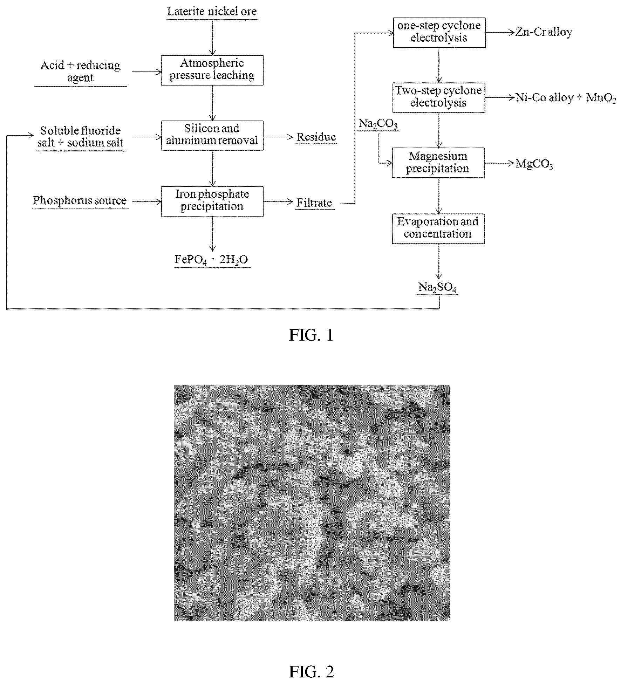

Referring to FIG. 1, the disclosure provides a method for extracting metals from saprolite laterite nickel ore, including the following steps:
(1) Separating and grinding the saprolite laterite nickel ore to obtain a laterite nickel ore powder.
(2) Mixing the laterite nickel ore powder, water, an acid, and a reducing agent to obtain an ore pulp, and then subjecting the ore pulp to atmospheric pressure acid leaching at a temperature of 50-90°C for 1-5 h to obtain a leaching residue and a leaching solution; wherein the concentration of the acid is 1-3 mol/L; the dosage of the reducing agent is 5-20 g/L; and the solid-liquid ratio of the ore pulp is 50-300 g/L.
   The acid used in the atmospheric pressure acid leaching of the disclosure is an organic acid or an inorganic acid commonly used in the art. For example, the inorganic acid can be one or more of sulfuric acid, phosphoric acid, nitric acid, and hydrochloric acid. The organic acid can be one or more of formic acid, oxalic acid, citric acid, acetic acid, and ascorbic acid. The reducing agent may be a reducing agent commonly used in the art, such as one or more of sodium sulfite, sodium bisulfite, sodium metabisulfite, iron powder, and ferrous sulfate.
(3) Adding any one or more of soluble fluoride salts such as sodium fluoride, potassium fluoride, and ammonium fluoride and soluble sodium salts such as sodium chloride, sodium fluoride, and sodium sulfate to the leaching solution, wherein the dosage of the soluble fluoride salts is 3-20 g/L and the amount of the soluble sodium salts is 5-20 g/L; controlling the pH of the leaching solution to be 1-3 by using a dilute alkaline solution, and reacting at room temperature for 0.5-3 h so that aluminum precipitates in the form of cryolite, and silicon precipitates in the form of sodium fluorosilicate; and performing solid-liquid separation to obtain a silicon-aluminum residue and a de-silicon-aluminumed liquid.
(4) Adding a phosphorus source to the de-silicon-aluminumed liquid for a precipitation reaction, wherein the phosphorus source can be one or more of phosphoric acid, sodium phosphate, ammonium dihydrogen phosphate, ammonium monohydrogen phosphate, and ammonium phosphate, preferably sodium phosphate, and the molar ratio of the phosphorus source to the iron element in the leaching solution is (1-1.1): 1; de-silicon-aluminumed liquid to obtain iron phosphate and de-ironed liquid.
   The method for preparing iron phosphate by precipitation according to the disclosure is preferably a "two-step method" process, i.e. firstly precipitating to prepare crude iron phosphate and then performing a transition ageing to prepare battery-grade iron phosphate. The whole process parameters are controlled as follows: controlling the pH of the de-silicon-aluminumed liquid to 1.8-2.0 using dilute sulfuric acid or dilute alkaline solution, reacting the phosphorus source with the iron in the solution at a temperature of 55-60°C for 2 h, then adding a phosphorus source to the solution, the dosage thereof being 0.1 mol/L, controlling the temperature to 85-90°C, continuing the reaction for 2 h, filtering, and washing to obtain battery-grade iron phosphate.
(5) Subjecting the de-ironed liquid to a one-step cyclone electrolysis to obtain a zinc-chromium alloy and a one-step cyclone electrolyzed liquid; wherein the conditions for one-step cyclone electrolysis include: the solution acidity is 0.1-0.3 mol/L; the temperature is 30-40°C; the current density is 400-600 A/m²; the electrolysis time is 5-10 h; the cathode is a crude zinc plate; the anode is a lead-silver alloy plate; a zinc-chromium alloy is deposited on the cathode plate in the electrolysis process; and the substitution period of the cathode plate is 48 h.
   The disclosure also allows for further electrolytic refining of the zinc-chromium alloy deposited on the cathode plate to obtain high-purity zinc after one-step cyclone electrolysis using means available in the industry.
(6) Subjecting the one-step cyclone electrolyzed liquid to a two-step cyclone electrolysis to obtain a nickel-cobalt alloy, a manganese oxide, and a two-step cyclone electrolyzed liquid; wherein the conditions for the two-step cyclone electrolysis include: the pH of the one-step cyclone electrolyzed liquid is controlled to 2-4; the temperature is 40-50°C; the current density is 100-200 A/m²; and the electrolysis time is 5-10 h; the cathode is a stainless steel plate; the anode is a lead-silver alloy plate and provided with a membrane bag; the stripping period of the Ni-Co alloy formed by the cathode electrodeposition is 48 h to obtain the Ni-Co alloy; and MnO₂ is collected in the anode membrane bag.
(7) Adding sodium carbonate to the two-step cyclone electrolyzed liquid to adjust the pH of the solution to 10-12, precipitating and reacting at room temperature for 0.5 h, and performing solid-liquid separation to obtain magnesium carbonate and a magnesium precipitation liquid.
(8) Evaporating and concentrating the de-magnesiumed liquid, crystallizing out to obtain sodium sulfate, and using the sodium sulfate as a sodium salt for silicon-aluminum removal in step (3).

In order to make the objectives, technical solutions, and advantages of the disclosure clearer, embodiments of the disclosure will be described in further detail below.

The composition of the saprolite laterite nickel ore used in the following examples is shown in Table 1:

**Table 1 Composition of saprolite laterite nickel ore**

| Element | Ni | Co | Mn | Fe | Al | Cr | Ca | Mg | Si |
|---|---|---|---|---|---|---|---|---|---|
| Content | 1.24% | 0.1% | 0.75% | 43.82% | 3.36% | 0.97% | 0.01% | 0.89% | 12-14% |

### Example 1

A method for extracting metals from saprolite laterite nickel ore included the following steps.

The saprolite laterite nickel ore was separated and ground to obtain a laterite nickel ore powder. Then, the laterite nickel ore powder, water, sulfuric acid, and sodium metabisulfite were mixed according to a solid-liquid ratio of 200 g/L to prepare an ore pulp. The sulfuric acid concentration in the ore pulp was 2 mol/L and the sodium metabisulfite was 10 g/L. The ore pulp was heated to 80°C and stirred for leaching for 2 h. A leaching residue and a leaching solution were obtained by filtration after the reaction was finished. The contents of Ni, Co, Mn, Fe, and other metals in the leaching residue were less than 0.05%. The residual acid in the leaching solution was about 0.3 mol/L. The leaching residue can be used as brick-making material or directly landfilled.

The leaching solution was added with 10 g/L of NaF and 10 g/L of Na₂SO₄. The pH was adjusted to 2 by using a 10% NaOH solution. The reaction was carried out for 1 h and then filtered to obtain a silicon-aluminum residue and a de-silicon-aluminumed liquid. The concentrations of residual aluminum and silicon in the de-silicon-aluminumed liquid were measured to be reduced to less than 5 ppm. The de-silicon-aluminumed liquid was continued to be added with sodium phosphate. The molar ratio P/Fe in the solution was adjusted to be 1.05. Iron was precipitated using a "two-step method" process and filtered to obtain iron phosphate and a de-ironed liquid. The Fe/P molar ratio in iron phosphate was determined to be 0.975, and the content of impurity elements met the requirements of Chinese battery-grade iron phosphate industry standard (HG/T 4701-2021). The SEM diagram of iron phosphate is shown in FIG. 2.

The de-ironed liquid was subjected to a two-step cyclone electrolysis to recover valuable metals. The process parameters of the one-step cyclone electrolysis included: the acidity of the de-ironed liquid was controlled to be 0.2 mol/L;the solution temperature was 35°C; the current density was 500 A/m²; and the electrolysis time was 8 h. The cathode was a crude zinc plate and the anode was a lead-silver alloy plate. A zinc-chromium alloy was deposited on the cathode plate in the electrolysis process. The substitution period of the cathode plate was 48 h. After completion of electrolysis, the concentration of Zn²⁺ decreased to less than 10 ppm, the concentration of Cr³⁺ decreased to less than 5 ppm, and the loss rates of Ni²⁺, Co²⁺, Mn²⁺ were less than 1%. Then, the one-step cyclone electrolyzed liquid was subjected to a two-step cyclone electrolysis to obtain a nickel-cobalt alloy, a manganese oxide, and a two-step cyclone electrolyzed liquid. The process parameters of the two-step cyclone electrolysis included: the pH of the solution was adjusted to 3; the solution temperature was 50°C; the current density was 150 A/m²; and the electrolysis time was 8 h. The cathode was a stainless steel plate; the anode was a lead-silver alloy plate and provided with a membrane bag; the stripping period of the Ni-Co alloy formed by the cathode electrodeposition was 48 h to obtain the Ni-Co alloy; and MnO₂ was collected in the anode membrane bag. After the electrolysis was completed, the concentration of Ni²⁺ and Co²⁺ ions in the solution decreased to below 50 ppm, and the concentration of Mn²⁺ ions decreased to below 10 ppm.

The two-step cyclone electrolyzed liquid was added with a saturated sodium carbonate solution to adjust the pH of the solution to 11. The reaction was carried out 1 h and then filtered to obtain MgCO₃. The concentration of Mg²⁺ in the solution decreased to less than 20 ppm. The de-magnesiumed liquid was evaporated and concentrated to obtain sodium sulfate by using the existing technical means in the industry, and the sodium sulfate was reused in the silicon-aluminum removal stage.

### Example 2

A method for extracting metals from saprolite laterite nickel ore includes the following steps:
The saprolite laterite nickel ore was separated and ground to obtain a laterite nickel ore powder. Then, the laterite nickel ore powder, water, sulfuric acid, and sodium metabisulfite were mixed according to a solid-liquid ratio of 200 g/L to prepare an ore pulp. The sulfuric acid concentration in the ore pulp was 2 mol/L and the sodium metabisulfite was 10 g/L. The ore pulp was heated to 80°C and stirred for leaching for 2 h. A leaching residue and a leaching solution were obtained by filtration after the reaction was finished. The contents of Ni, Co, Mn, Fe, and other metals in the leaching residue were less than 0.05%. The residual acid in the leaching solution was about 0.3 mol/L. The leaching residue can be used as a brick-making material or directly landfilled.

The leaching solution was added with 10 g/L of NaF and 10 g/L of Na₂SO₄. The pH was adjusted to 2 by using a 10% NaOH solution. The reaction was carried out for 1 h and then filtered to obtain a silicon-aluminum residue and a de-silicon-aluminumed liquid. The concentrations of residual aluminum and silicon in the de-silicon-aluminumed liquid were measured to be reduced to less than 5 ppm. The de-silicon-aluminumed liquid was continued to be added with sodium phosphate. The molar ratio P/Fe in the solution was adjusted to be 1.05. Iron was precipitated using a "two-step method" process and filtered to obtain iron phosphate and a de-ironed liquid. The Fe/P molar ratio in iron phosphate was determined to be 0.975, and the content of impurity elements met the requirements of Chinese battery-grade iron phosphate industry standard (HG/T 4701-2021).

The de-ironed liquid was subjected to a two-step cyclone electrolysis to recover valuable metals. The process parameters of the one-step cyclone electrolysis included: the acidity of the de-ironed liquid was controlled to be 0.3 mol/L; the solution temperature was 35°C; the current density was 600 A/m²; and the electrolysis time was 5 h. The cathode was a crude zinc plate and the anode was a lead-silver alloy plate. A zinc-chromium alloy was deposited on the cathode plate in the electrolysis process. The substitution period of the cathode plate was 48 h. After completion of electrolysis, the concentration of Zn²⁺ decreased to less than 10 ppm, the concentration of Cr³⁺ decreased to less than 5 ppm, and the loss rates of Ni²⁺, Co²⁺, Mn²⁺ were less than 1%. Then the one-step cyclone electrolyzed liquid was subjected to a two-step cyclone electrolysis to obtain a nickel-cobalt alloy, a manganese oxide, and a two-step cyclone electrolyzed liquid. The process parameters of the two-step cyclone electrolysis included: the pH of the solution was adjusted to 2; the solution temperature was 50°C; the current density was 100 A/m²; and the electrolysis time was 8 h. The cathode was a stainless steel plate; the anode was a lead-silver alloy plate and provided with a membrane bag; the stripping period of the Ni-Co alloy formed by the cathode electrodeposition was 48 h to obtain the Ni-Co alloy; and MnO₂ was collected in the anode membrane bag. After the electrolysis was completed, the concentration of Ni²⁺ and Co²⁺ ions in the solution decreased to below 50 ppm, and the concentration of Mn²⁺ions decreased to below 10 ppm.

The two-step cyclone electrolyzed liquid was added with a saturated sodium carbonate solution to adjust the pH of the solution to 11. The reaction was carried out 1 h and then filtered to obtain MgCO₃. The concentration of Mg²⁺ in the solution decreased to less than 20 ppm. The de-magnesiumed liquid was evaporated and concentrated to obtain sodium sulfate by using the existing technical means in the industry, and the sodium sulfate was reused in the aluminum-silicon removal stage.

### Example 3

A method for extracting metals from saprolite laterite nickel ore includes the following steps:
The saprolite laterite nickel ore was separated and ground to obtain a laterite nickel ore powder. Then, the laterite nickel ore powder, water, sulfuric acid, and sodium metabisulfite were mixed according to a solid-liquid ratio of 300 g/L to prepare an ore pulp. The sulfuric acid concentration in the ore pulp was 3 mol/L and the sodium metabisulfite was 5 g/L. The ore pulp was heated to 50°C and stirred for leaching for 5 h. A leaching residue and a leaching solution were obtained by filtration after the reaction was finished. The contents of Ni, Co, Mn, Fe, and other metals in the leaching residue were less than 0.05%. The residual acid in the leaching solution was about 0.3 mol/L. The leaching residue can be used as a brick-making material or directly landfilled.

The leaching solution was added with 20 g/L of NaF and 10 g/L of Na₂SO₄. The pH was adjusted to 2 by using a 10% NaOH solution. The reaction was carried out for 1 h and then filtered to obtain a silicon-aluminum residue and a de-silicon-aluminumed liquid. The concentrations of residual aluminum and silicon in the de-silicon-aluminumed liquid were measured to be reduced to less than 5 ppm. The de-silicon-aluminumed liquid was continued to be added with sodium phosphate. The molar ratio P/Fe in the solution was adjusted to be 1.05. Iron was precipitated using a "two-step method" process and filtered to obtain iron phosphate and a de-ironed liquid. The Fe/P molar ratio in iron phosphate was determined to be 0.975, and the content of impurity elements met the requirements of Chinese battery-grade iron phosphate industry standard (HG/T 4701-2021).

The de-ironed liquid was subjected to a two-step cyclone electrolysis to recover valuable metals. The process parameters of the one-step cyclone electrolysis included: the acidity of the de-ironed liquid was controlled to be 0.1 mol/L; the solution temperature was 35°C; the current density was 400 A/m²; and the electrolysis time was 10 h. The cathode was a crude zinc plate and the anode was a lead-silver alloy plate. A zinc-chromium alloy was deposited on the cathode plate in the electrolysis process. The substitution period of the cathode plate was 48 h. After completion of electrolysis, the concentration of Zn²⁺ decreased to less than 10 ppm, the concentration of Cr³⁺ decreased to less than 5 ppm, and the loss rates of Ni²⁺, Co²⁺, Mn²⁺ were less than 1%. Then the one-step cyclone electrolyzed liquid was subjected to a two-step cyclone electrolysis to obtain a nickel-cobalt alloy, a manganese oxide, and a two-step cyclone electrolyzed liquid. The process parameters of the two-step cyclone electrolysis included: the pH of the solution was adjusted to 4; the solution temperature was 50°C; the current density was 200 A/m²; and the electrolysis time was 10 h. The cathode was a stainless steel plate; the anode was a lead-silver alloy plate and provided with a membrane bag; the stripping period of the Ni-Co alloy formed by the cathode electrodeposition was 48 h to obtain the Ni-Co alloy; and MnO₂ was collected in the anode membrane bag. After the electrolysis was completed, the concentration of Ni²⁺ and Co²⁺ ions in the solution decreased to below 50 ppm, and the concentration of Mn²⁺ ions decreased to below 10 ppm.

The two-step cyclone electrolyzed liquid was added with a saturated sodium carbonate solution to adjust the pH of the solution to 11. The reaction was carried out 1 h and then filtered to obtain MgCO₃. The concentration of Mg²⁺ in the solution decreased to less than 20 ppm. The de-magnesiumed liquid was evaporated and concentrated to obtain sodium sulfate by using the existing technical means in the industry, and the sodium sulfate was reused in the aluminum-silicon removal stage.

The extraction rates of valuable metals from saprolite laterite nickel ore of Examples 1-3 are shown in Table 2 below, wherein the Zn-Cr extraction rate is the ratio of the mass of Zn-Cr alloy stripped from the one-step cyclone electrolytic cathode plate to the total mass of Zn and Cr in the laterite nickel ore; the Ni-Co extraction rate is the ratio of the total mass of Ni-Co alloy stripped from the two-step cyclone electrolytic cathode plate to the total mass of Ni and Co in the laterite nickel ore.

**Table 2 Extraction rate of various valuable metals**

| Item | Ni-Co extraction rate | Zn-Cr extraction rate | Mn extraction rate |
|---|---|---|---|
| Example 1 | 96.5% | 98.9% | 92.1% |
| Example 2 | 95.8% | 98.6% | 91.8% |
| Example 3 | 95.3% | 98.2% | 90.9% |

As can be seen from the table above, by means of the process steps provided by the disclosure, an effective Ni-Co extraction rate exceeding 95%, an effective Mn extraction rate exceeding 90%, and an effective Zn-Cr extraction rate exceeding 98% can be achieved throughout the entire process.

In summary, according to the disclosure: (1) atmospheric pressure leaching avoids the large amount of energy consumption caused by high pressure leaching in the existing process, and promotes carbon dioxide emission reduction.

(2) In the treatment process, the resource utilization of iron element to prepare battery-grade iron phosphate and magnesium element to prepare magnesium carbonate are achieved simultaneously, without additional smelting slag recycling treatment process, which greatly reduces the complexity of the process flow and has more economic cost advantages.

(3) The cyclone electrolysis technology is introduced into the field of laterite nickel ore smelting. The two-step cyclone electrolysis can solve the difficult separation problem of zinc-chromium and nickel-cobalt-manganese in the traditional smelting process. High-purity Zn-Cr alloy and Ni-Co alloy can be obtained respectively. Manganese can be simultaneously extracted and utilized in the form of MnO₂.

It should be noted that each of the above-mentioned examples belongs to the same inventive concept, and the description of each example has its own emphasis. Where the description of each example is not exhaustive, reference can be made to the description of other examples.

The foregoing examples merely present embodiments of the disclosure and are described in more detail and are not to be construed as limiting the scope of the disclosure. It should be noted that, for a person of ordinary skill in the art, a number of deformations and improvements can be made without departing from the conception of the disclosure, all of which fall within the scope of the disclosure. Therefore, the scope of the patent for the disclosure shall be governed by the appended claims.

## Claims

1. A method for extracting metals from saprolite laterite nickel ore, **characterized by** comprising the following steps:
(1) separating and grinding the saprolite laterite nickel ore to obtain a laterite nickel ore powder;
(2) mixing the laterite nickel ore powder, water, an acid, and a reducing agent to obtain an ore pulp, and subjecting the ore pulp to atmospheric pressure acid leaching to obtain a leaching residue and a leaching solution;
(3) adding a soluble fluoride salt and soluble sodium salt to the leaching solution and performing solid-liquid separation to obtain a silicon-aluminum residue and a de-silicon-aluminumed liquid; wherein the silicon-aluminum residue contains sodium fluoroaluminate and sodium fluorosilicate;
(4) adding a phosphorus source to the de-silicon-aluminumed liquid, and performing solid-liquid separation to obtain an iron phosphate and a de-ironed liquid;
(5) subjecting the de-ironed liquid to a one-step cyclone electrolysis to obtain a zinc-chromium alloy and a one-step cyclone electrolyzed liquid;
(6) subjecting the one-step cyclone electrolyzed liquid to a two-step cyclone electrolysis to obtain a nickel-cobalt alloy, a manganese oxide, and a two-step cyclone electrolyzed liquid; and
(7) adding sodium carbonate to the two-step cyclone electrolyzed liquid for a precipitation reaction to obtain magnesium carbonate and a de-magnesiumed liquid.

2. The method for extracting metals from saprolite laterite nickel ore according to claim 1, **characterized in that** the acid in step (2) is an organic acid or an inorganic acid, and the reducing agent is one or more of sodium sulfite, sodium bisulfite, sodium metabisulfite, iron powder, and ferrous sulfate.

3. The method for extracting metals from saprolite laterite nickel ore according to claim 1, **characterized in that** in step (2), the concentration of the acid is 1-3 mol/L; the dosage of the reducing agent is 5-20 g/L; and the solid-liquid ratio of the ore pulp is 50-300 g/L.

4. The method for extracting metals from saprolite laterite nickel ore according to claim 1, **characterized in that** the leaching temperature of the atmospheric pressure acid leaching in step (2) is 50-90°C and the leaching time is 1-5 h.

5. The method for extracting metals from saprolite laterite nickel ore according to claim 1, **characterized in that** the soluble fluoride salt in step (3) is at least one of sodium fluoride, potassium fluoride, and ammonium fluoride; the soluble sodium salt is at least one of sodium fluoride, sodium chloride, and sodium sulfate.

6. The method for extracting metals from saprolite laterite nickel ore according to claim 1, **characterized in that** in step (3), a dosage of the soluble fluoride salt used is 3-20 g/L, and a dosage of the soluble sodium salt is 5-20 g/L; and a pH of the leaching solution is controlled to be 1-3 by using a dilute alkaline solution, and the reaction is carried out at room temperature for 0.5-3 h.

7. The method for extracting metals from saprolite laterite nickel ore according to claim 1, **characterized in that** the phosphorus source in step (4) is one or more of phosphoric acid, sodium phosphate, ammonium dihydrogen phosphate, ammonium monohydrogen phosphate, and ammonium phosphate; the molar ratio of the phosphorus source to the elemental iron in the leaching solution is (1-1.1): 1.

8. The method for extracting metals from saprolite laterite nickel ore according to claim 1, **characterized in that** in the one-step cyclone electrolysis of step (5), the acidity of the de-ironed liquid is 0.1-0.3 mol/L; the temperature is 30-40°C; the current density is 400-600 A/m²; and the electrolysis time is 5-10 h.

9. The method for extracting metals from saprolite laterite nickel ore according to claim 1, **characterized in that** in the two-step cyclone electrolysis of step (6), the pH of the one-step cyclone electrolyzed liquid is controlled to 2-4; the temperature is 40-50°C; the current density is 100-200 A/m²; and the electrolysis time is 5-10 h.

10. The method for extracting metals from saprolite laterite nickel ore according to claim 1, **characterized by** further comprising subjecting the de-magnesiumed liquid to evaporation and concentration to obtain sodium sulfate, and the sodium sulfate is reused as a sodium salt for silicon-aluminum removal in step (3).

## Patentansprüche

1. Verfahren zur Gewinnung von Metallen aus Saprolit-Laterit-Nickelerz, **gekennzeichnet durch** die folgenden Schritte:
(1) Trennen und Mahlen des Saprolit-Laterit-Nickelerzes, um ein Laterit-Nickelerzpulver zu erhalten;
(2) Mischen des Laterit-Nickelerzpulvers, Wasser, einer Säure und eines Reduktionsmittels, um eine Erzmasse zu erhalten, und Unterziehen der Erzmasse einer Säureauslaugung bei atmosphärischem Druck, um einen Auslaugungsrückstand und eine Auslaugungslösung zu erhalten;
(3) Zugeben eines löslichen Fluoridsalzes und eines löslichen Natriumsalzes zur Auslaugungslösung und Durchführen einer Fest-Flüssig-Trennung, um einen Silizium-Aluminium-Rückstand und eine silizium- und aluminiumfreie Flüssigkeit zu erhalten; wobei der Silizium-Aluminium-Rückstand Natriumfluoraluminat und Natriumfluorsilikat enthält;
(4) Zugeben einer Phosphorquelle zur silizium- und aluminiumfreien Flüssigkeit und Durchführen einer Fest-Flüssig-Trennung, um ein Eisenphosphat und eine eisenfreie Flüssigkeit zu erhalten;
(5) Unterziehen der eisenfreien Flüssigkeit einer einstufigen Zyklon-Elektrolyse, um eine Zink-Chrom-Legierung und eine einstufig zyklon-elektrolysierte Flüssigkeit zu erhalten;
(6) Unterziehen der einstufigen zyklon-elektrolysierten Flüssigkeit einer zweistufigen Zyklon-Elektrolyse, um eine Nickel-Kobalt-Legierung, ein Manganoxid und eine zweistufige zyklon-elektrolysierte Flüssigkeit zu erhalten; und
(7) Zugeben von Natriumcarbonat zur zweistufigen zyklon-elektrolysierten Flüssigkeit für eine Fällungsreaktion, um Magnesiumcarbonat und eine magnesiumfreie Flüssigkeit zu erhalten.

2. Verfahren zur Gewinnung von Metallen aus Saprolit-Laterit-Nickelerz gemäß Anspruch 1, **dadurch gekennzeichnet, dass** die Säure in Schritt (2) eine organische Säure oder eine anorganische Säure ist und das Reduktionsmittel eines oder mehrere von Natriumsulfit, Natriumbisulfit, Natriummetabisulfit, Eisenpulver und Eisensulfat ist.

3. Verfahren zur Gewinnung von Metallen aus Saprolith-Laterit-Nickelerz gemäß Anspruch 1, **dadurch gekennzeichnet, dass** in Schritt (2) die Konzentration der Säure 1-3 mol/L beträgt; die Dosierung des Reduktionsmittels 5-20 g/L beträgt; und das Fest-Flüssig-Verhältnis der Erzmasse 50-300 g/L beträgt.

4. Verfahren zur Gewinnung von Metallen aus Saprolit-Laterit-Nickelerz gemäß Anspruch 1, **dadurch gekennzeichnet, dass** die Auslaugungstemperatur der Säureauslaugung bei atmosphärischem Druck in Schritt (2) 50-90 °C beträgt und die Auslaugungszeit 1-5 Stunden beträgt.

5. Verfahren zur Gewinnung von Metallen aus Saprolit-Laterit-Nickelerz gemäß Anspruch 1, **dadurch gekennzeichnet, dass** das lösliche Fluoridsalz in Schritt (3) mindestens eines von Natriumfluorid, Kaliumfluorid und Ammoniumfluorid ist; und das lösliche Natriumsalz mindestens eines von Natriumfluorid, Natriumchlorid und Natriumsulfat ist.

6. Verfahren zur Gewinnung von Metallen aus Saprolith-Laterit-Nickelerz gemäß Anspruch 1, **dadurch gekennzeichnet, dass** in Schritt (3) eine Dosierung des verwendeten löslichen Fluoridsalzes von 3-20 g/L beträgt und eine Dosierung des löslichen Natriumsalzes von 5-20 g/L beträgt; und der pH-Wert der Auslaugungslösung unter Verwendung einer verdünnten alkalischen Lösung auf 1-3 geregelt wird, wobei die Reaktion bei Raumtemperatur 0,5-3 Stunden lang durchgeführt wird.

7. Verfahren zur Gewinnung von Metallen aus Saprolith-Laterit-Nickelerz gemäß Anspruch 1, **dadurch gekennzeichnet, dass** die Phosphorquelle in Schritt (4) eines oder mehrere von Phosphorsäure, Natriumphosphat, Ammoniumdihydrogenphosphat, Ammoniummonohydrogenphosphat und Ammoniumphosphat ist; wobei das Molverhältnis der Phosphorquelle zum elementaren Eisen in der Auslaugungslösung (1-1,1): 1 beträgt.

8. Verfahren zur Gewinnung von Metallen aus Saprolith-Laterit-Nickelerz gemäß Anspruch 1, **dadurch gekennzeichnet, dass** bei der einstufigen Zyklon-Elektrolyse des Schritts (5) die Säurekonzentration der eisenfreien Flüssigkeit 0,1-0,3 mol/L beträgt; die Temperatur 30-40 °C beträgt; die Stromdichte 400-600 A/m² beträgt; und die Elektrolysezeit 5-10 h beträgt.

9. Verfahren zur Gewinnung von Metallen aus Saprolit-Laterit-Nickelerz gemäß Anspruch 1, **dadurch gekennzeichnet, dass** bei der zweistufigen Zyklon-Elektrolyse des Schritts (6) der pH-Wert der einstufigen zyklon-elektrolysierten Flüssigkeit auf 2-4 geregelt wird; die Temperatur 40-50 °C beträgt; die Stromdichte 100-200 A/m² beträgt; und die Elektrolysezeit 5-10 Stunden beträgt.

10. Verfahren zur Gewinnung von Metallen aus Saprolit-Laterit-Nickelerz gemäß Anspruch 1, **dadurch gekennzeichnet, dass** es ferner das Unterziehen der magnesiumfreien Flüssigkeit einer Verdampfung und Konzentration umfasst, um Natriumsulfat zu erhalten, und dass das Natriumsulfat als Natriumsalz zur Entfernung von Silizium und Aluminium in Schritt (3) wiederverwendet wird.

## Revendications

1. Procédé d'extraction de métaux à partir d'un minerai de nickel latérite saprolite, **caractérisé en ce qu'**il comporte les étapes suivantes :
(1) la séparation et le broyage du minerai de nickel latérite saprolite pour obtenir une poudre de minerai de nickel latérite ;
(2) le mélange de la poudre de minerai de nickel latérite, d'eau, d'un acide et d'un agent réducteur pour obtenir une pulpe de minerai, et la soumission de la pulpe de minerai à une lixiviation acide sous pression atmosphérique pour obtenir un résidu de lixiviation et une solution de lixiviation ;
(3) l'ajout d'un sel de fluorure soluble et d'un sel de sodium soluble à la solution de lixiviation et la réalisation d'une séparation solide-liquide pour obtenir un résidu de silicium-aluminium et un liquide désilicié-désaluminé ; dans lequel le résidu de silicium-aluminium contient du fluoroaluminate de sodium et du fluorosilicate de sodium ;
(4) l'ajout d'une source de phosphore au liquide désilicié-désaluminé, et la réalisation d'une séparation solide-liquide pour obtenir un phosphate de fer et un liquide déferré ;
(5) la soumission du liquide déferré à une électrolyse cyclonique en une étape pour obtenir un alliage zinc-chrome et un liquide d'électrolyse cyclonique en une étape ;
(6) la soumission du liquide d'électrolyse cyclonique en une étape à une électrolyse cyclonique en deux étapes pour obtenir un alliage nickel-cobalt, un oxyde de manganèse et un liquide d'électrolyse cyclonique en deux étapes ; et
(7) l'ajout de carbonate de sodium au liquide d'électrolyse cyclonique en deux étapes pour une réaction de précipitation afin d'obtenir du carbonate de magnésium et un liquide démagnésié.

2. Procédé d'extraction de métaux à partir d'un minerai de nickel latérite saprolite selon la revendication 1, **caractérisé en ce que** l'acide dans l'étape (2) est un acide organique ou un acide inorganique, et l'agent réducteur est un ou plusieurs parmi le sulfite de sodium, le bisulfite de sodium, le métabisulfite de sodium, une poudre de fer et le sulfate ferreux.

3. Procédé d'extraction de métaux à partir d'un minerai de nickel latérite saprolite selon la revendication 1, **caractérisé en ce que**, dans l'étape (2), la concentration de l'acide est de 1 à 3 moles/l ; le dosage de l'agent réducteur est de 5 à 20 g/l ; et le rapport solide-liquide de la pulpe de minerai est de 50 à 300 g/l.

4. Procédé d'extraction de métaux à partir d'un minerai de nickel latérite saprolite selon la revendication 1, **caractérisé en ce que** la température de la lixiviation acide sous pression atmosphérique à l'étape (2) est de 50 à 90 °C et le temps de lixiviation est de 1 à 5 h.

5. Procédé d'extraction de métaux à partir d'un minerai de nickel latérite saprolite selon la revendication 1, **caractérisé en ce que** le sel de fluorure soluble à l'étape (3) est au moins l'un parmi le fluorure de sodium, le fluorure de potassium et le fluorure d'ammonium ; le sel de sodium soluble est au moins l'un parmi le fluorure de sodium, le chlorure de sodium et le sulfate de sodium.

6. Procédé d'extraction de métaux à partir d'un minerai de nickel latérite saprolite selon la revendication 1, **caractérisé en ce que**, dans l'étape (3), un dosage du sel de fluorure soluble utilisé est de 3 à 20 g/l, et un dosage du sel de sodium soluble est de 5 à 20 g/l ; et un pH de la solution de lixiviation est contrôlé pour être de 1 à 3 en utilisant une solution alcaline diluée, et la réaction est réalisée à température ambiante pendant 0,5 à 3 h.

7. Procédé d'extraction de métaux à partir d'un minerai de nickel latérite saprolite selon la revendication 1, **caractérisé en ce que** la source de phosphore à l'étape (4) est un ou plusieurs parmi l'acide phosphorique, le phosphate de sodium, le dihydrogénophosphate d'ammonium, le monohydrogénophosphate d'ammonium et le phosphate d'ammonium ; le rapport molaire de la source de phosphore sur le fer élémentaire dans la solution de lixiviation est (1 à 1,1): 1.

8. Procédé d'extraction de métaux à partir d'un minerai de nickel latérite saprolite selon la revendication 1, **caractérisé en ce que**, dans l'électrolyse cyclonique en une étape de l'étape (5), l'acidité du liquide déferré est de 0,1 à 0,3 moles/l ; la température est de 30 à 40 °C ; la densité de courant est de 400 à 600 A/m² ; et le temps d'électrolyse est de 5 à 10 h.

9. Procédé d'extraction de métaux à partir d'un minerai nickel latérite saprolite selon la revendication 1, **caractérisé en ce que**, dans l'électrolyse cyclonique en deux étapes de l'étape (6), le pH du liquide d'électrolyse cyclonique en une étape est contrôlé à 2-4 ; la température est de 40 à 50 °C ; la densité de courant est de 100 à 200 A/m² ; et le temps d'électrolyse est de 5 à 10 h.

10. Procédé d'extraction de métaux à partir d'un minerai de nickel latérite saprolite selon la revendication 1, **caractérisé en ce qu'**il comprend en outre la soumission du liquide démagnésié à une évaporation et à une concentration pour obtenir du sulfate de sodium, et le sulfate de sodium est réutilisé comme sel de sodium pour l'élimination du silicium-aluminium à l'étape (3).
